# EUROPEAN PATENT SPECIFICATION

(11) **EP 1 111 341 B1**
(45) Date of publication and mention of the grant of the patent: **09.07.2008**
(21) Application number: 00126570.1
(22) Date of filing: 12.12.2000
(51) Int. Cl.: G01C 21/36

(54) **Navigation system**
Navigationssystem
Système de navigation

(30) Priority: 14.12.1999 JP 35429599; 12.04.2000 JP 2000110800; 06.10.2000 JP 2000308132
(43) Date of publication of application: 27.06.2001
(73) Proprietor: MATSUSHITA ELECTRIC INDUSTRIAL CO., LTD., Kadoma-shi, Osaka 571-0000 (JP)
(72) Inventor: Sakamoto, Kiyomi, Ikoma-shi, Nara-ken (JP); Ueyama, Yoshiki, Sakai-chi, Osaka-fu (JP); Nomura, Noboru, Kyoto-shi, Kyoto-fu (JP)
(74) Representative: Lang, Johannes

(56) References cited:
- WO-A-88/07719
- GB-A- 2 159 652
- US-A- 4 703 412

## Description

### BACKGROUND OF THE INVENTION

### Field of the Invention

The present invention relates to command control devices and navigation devices using a computer system and, more specifically, to a command control device and navigation device capable of executing various commands and controlling linked address through selection on a screen displayed when a command is executed or on a screen of an Internet browser.

### Description of the Background Art

In conventional command control devices using a computer system, commands are registered as relevant icons provided in advance by the system or as menu options. Therefore, to select a command, a user generally selects an icon or menu option that corresponds to that command.

In conventional navigation devices for vehicles, navigation commands are composed of various instructions such as the one for switching a map display format on a guide screen. Such navigation commands are registered as, for example, text menu options hierarchically arranged in a tree structure or relevant icon images provided in advance by the system, so as to be arbitrarily selected by users. Therefore, to select a navigation command, a user generally selects an icon or menu option that corresponds to that command.

In conventional Internet browsers, jump-destination addresses or URLs (Uniform Resource Locators) provided in advance by the system or registered by the user are arranged as bookmarks in text list form. Therefore, the user generally selects a jump-destination address from the text list of bookmarks.

As described above, in the conventional command control devices, images corresponding to commands are registered as icons or menu options provided in advance by the system, for example. Therefore, some users may have difficulties to tell, through intuition, which registered icon corresponds to which command. Also, the fact that many icon images are small in size and too symbolized to be understood contributes to the above problem.

Furthermore, as described above, in the conventional internet browsers, bookmarks are registered in text form as Internet addresses themselves or names of corresponding web pages. Therefore, some user may have difficulties to tell which registered address or name corresponds to which web page.

Document US 4,703,412 discloses a method of defining the content of an icon being displayed on the screen. This content consists of lighting commands. A thus defined icon is stored in the system memory and can later be recalled by pointing to the corresponding icon, which is presented among a plurality of icons on a screen.

### SUMMARY OF THE INVENTION

Therefore, an object of the present invention is to provide a command control device and navigation device that enable a user to specify or select an address through intuition and with one touch, instead of an address displayed in text form such as a complicated command string or bookmark, which cannot be selected intuitively.

The present invention has the following features to achieve the object above.

A first aspect of the present invention is directed to a command control device for executing a command that corresponds to a display image selected by a user, comprising:
an input section provided with an instruction determined by the user;
an output section for outputting a display screen that presents various information to the user;
an image capture section for capturing said display image corresponding to the command from said display screen;
a command control information generator for generating command control information including information about the display image captured by the image capture section and the command; and
a command control information storage for storing the command control information;
a command presenter for making the output section present the display image corresponding to the command control information stored in the command control information storage so that the user can select the command to be executed; and
a command selector, when the user selects the display image presented by the command presenter, for executing the command corresponding to the display image according to the instruction provided by the input section.

As described above, in the first aspect, the command control device is structured so as to store an information display screen that appears when a specific command is executed and the parameters required for executing that command. Therefore, by using the present command control device for information navigation, the user can easily execute the command while viewing the display image. Thus, improvement in user interface can be achieved. Furthermore, the changeable display information generated by the command control information generator can be used. Therefore, the user can easily and intuitively understand a menu display that prompts for command selection, and also can easily change the display scale to a desired one.

According to a second aspect, in the first aspect,
the image capture section captures the image of an area selected by the user from the display screen according to the instruction provided by the input section.

As described above, in the second aspect, the user can determine the timing when part of the screen displayed while an application corresponding to the command is being executed is generated as a display image for the command. Therefore, the display image that is easiest for the user to understand or is a user's favorite can be registered as the display image for command selection.

According to a third aspect, in the first aspect,
the image capture section automatically captures all or part of the display screen according to prescribed conditions while an application corresponding to the command is being executed.

As described above, in the third aspect, it is possible to automatically determine the timing when part of the screen displayed while an application corresponding to the command is being executed is generated as a display image for the command. Therefore, with little consideration of registering the display image, the user can easily select and execute the command while viewing the display image.

According to a fourth aspect, in the third aspect,
the prescribed conditions are determined based on either or both of the number of executions of the command and the number of execution frequencies of the command.

As described above, in the fourth aspect, if the command or address has been executed or accessed many time and at frequent intervals, but not yet registered as a bookmark or in the command control information storage, it is possible to automatically determine the timing when part of the screen displayed while an application corresponding to the command is being executed is generated as a display image for the command. Therefore, with little consideration of registering the display image, the user can easily select and execute the command while viewing the display image that is well-remembered through many or frequent viewing.

According to a fifth aspect, in the first aspect,
the display image is a moving picture that varies with time.

As described above, in the fifth aspect, the display image corresponding to the command can be a moving picture that has more impact that a still picture. Thus, the user can easily execute the command while viewing the display image.

According to a sixth aspect, in the first aspect,
the command control device further comprises a communication section for connecting to the Internet, wherein
the command presenter makes the display image presented as a bookmark of an Internet browser for presenting information that is received and transmitted through the communication section.

As described above, in the sixth aspect, the command control device is structured so as to store a display screen of a web page that appears when a specific command is executed and an Internet address that is required for executing that command. Therefore, by using the present command control device for an Internet browser, the user can easily select the Internet address while viewing the display image. Thus, improvement in user interface can be achieved.

According to a seventh aspect, in the sixth aspect,
the display image is a moving picture that varies with time.

As described above, in the seventh aspect, the display image corresponding to the Internet address can be a moving picture that has more impact that a still picture. Thus, the user can easily execute the web page corresponding to the Internet address while viewing the display image on the Internet browser.

According to an eighth aspect, in the sixth aspect,
the display image and a text list are both used as the bookmark.

As described above, in the eighth aspect, the conventional text list is also used as the bookmark. Thus, the user can use the conventional-type bookmarks the user has been accustomed to, and also bookmarks using display images with improved user interface.

A ninth aspect of the present invention is directed to a navigation device for displaying a guide including a map and provided with a navigation command for switching a display format of the map, the navigation device comprising:
a map data storage for previously storing information for generating the map;
a guide section for generating the map displayed in the display format corresponding to the navigation command from the information stored in the map data storage to generate the guide to a destination;
an output section for outputting a display screen including the guide generated by the guide section;
an image capture section for capturing a display image corresponding to the navigation command from the display screen;
a command control information generator for generating command control information including information about the display image captured by the image capture section and the navigation command;
a command control information storage for storing the command control information;
a command presenter for making the output section present the display image corresponding to the command control information stored in the command control information storage so that the user can select the navigation command to be executed; and
a command selector, when the user selects the display image presented by the command presenter, for executing the navigation command corresponding to the display image.

As described above, in the ninth aspect, the navigation device is structured so as to store a display screen of a web page that appears when a specific navigation command is executed and the parameters that are required for executing that navigation command. Therefore, when using the navigation device, the user can easily execute the navigation command while viewing the display image. Thus, improvement in user interface can be achieved. Furthermore, the changeable map display information generated by the command control information generator can be used. Therefore, the user can easily and intuitively understand a menu display that prompts for navigation command selection, and also can easily change the display scale to a desired one.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a command control device according to a first embodiment of the present invention;
FIG. 2 is a block diagram showing a detailed structure of an information processing section 2 of FIG. 1;
FIG. 3 is a flow chart showing the overall operation of the command control device according to the first embodiment of the present invention;
FIG. 4 is a block diagram showing the structure of a command control section 8 in the command control device according to the first embodiment of the present invention;
FIG. 5 is a flow chart showing the operation of the command control section 8;
FIG. 6 is a flow chart showing a detailed process in subroutine step S122;
FIG. 7 is a flow chart showing a detailed flow of a command control information generating process in subroutine step S123;
FIG. 8 is a diagram showing an example of command control information stored in a command control information storage 7 according to the first embodiment of the present invention;
FIG. 9 is a flow chart showing a command presenting process in subroutine step S124;
FIG. 10 is a diagram showing an example of display images corresponding to commands;
FIG. 11 is a flow chart showing a detailed command selecting process performed by a command selector 81 in subroutine step S125;
FIG. 12 is a diagram showing an example of command control information for use in a command control device according to a second embodiment of the present invention;
FIG. 13 is a diagram showing an example of command images displayed in step S1244;
FIG. 14 is a block diagram showing a navigation device according to a third embodiment of the present invention;
FIG. 15 is a block diagram showing a detailed structure of an information processing section 20 of FIG. 14;
FIG. 16 is a flow chart showing the overall operation of the navigation device according to the third embodiment of the present invention;
FIG. 17 is a diagram showing an example of command control information stored in the command control information storage 7 according to the third embodiment of the present invention; and
FIG. 18 is a diagram showing an example of display images corresponding to navigation commands.

### DESCRIPTION OF THE PREFERRED EMBODIMENTS

### (First Embodiment)

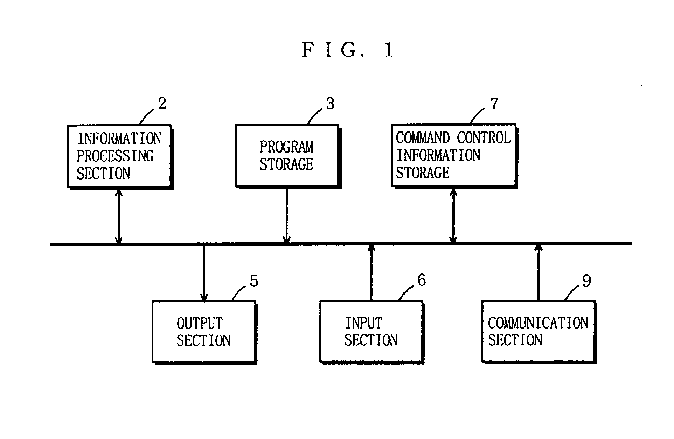

FIG. 1 is a block diagram showing the structure of a command control device according to a first embodiment of the present invention. The present command control device is implemented in a general computer system. In FIG. 1, the command control device includes an information processing section 2, a program storage 3, a command control information storage 7, an output section 5, an input section 6, a communication section 9. These components are connected to one another via a common system bus.

The information processing section 2 is constructed of a CPU that operates according to a program stored in the program storage 3 to carry out various processes for command control (command generating process, command selecting process, and the like). The program storage 3 may be implemented by a hard disk or semiconductor memory so as to fixedly store the program, or by an exchangeable storage medium such as an optical disk (CD, DVD, etc.) or semiconductor memory card for storing the program. If the program storage 3 is implemented by such exchangeable storage medium, the storage medium may be replaced by another one with a new program stored therein, as required.

The command control information storage 7 is constructed of a storage using a readable and writable memory, hard disk, semiconductor memory card, optical disk (CD-R/W, DVD-RAM), or the like, to store command information generated by the information processing section 2. Such information includes image data corresponding to the commands.

The output section 5 includes a display unit (such as liquid crystal display or CRT display) for displaying the information generated by the information processing section 2 and a speaker for producing sounds. The input section 6 may be a remote controller, touch censer, keyboard, mouse, or any other input device for selecting an application function and entering a parameter. The communication section 9 transmits and receives information to and from an external system through a telephone line and an ISDN (integrated services digital network) system. Such communication section 9 may be omitted if the present command control device does not require communications with any external system.

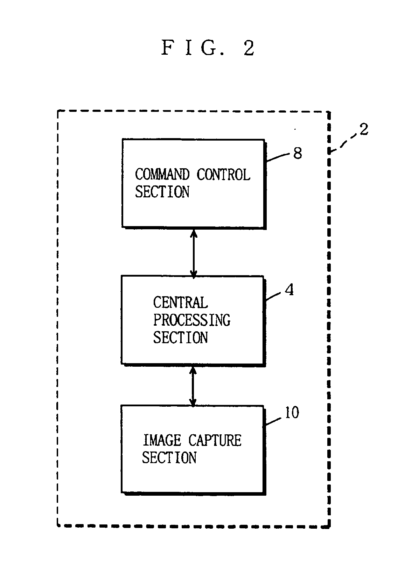

FIG. 2 is a block diagram showing a detailed structure of the information processing section 2 of FIG. 1. In FIG. 2, the information processing section 2 includes a central processing section 4, a command control section 8, and an image capture section 10.

The command control section 8 executes processes that correspond to generation and selection instructions. The generation instruction is for instructing the command control device to generate information such as an image that corresponds to a command to be executed. The command to be executed may be newly provided by the input section 6, or a command that is being executed or was most recently executed. The selection instruction is for instructing a process after the user selects an image that corresponds to the command to be executed.

The central processing section 4 transmits and receives various information to and from the command control section 8 and the image capture section 10 to control the operation of these two components of the device. The image capture section 10 captures, according to the generation instruction, an image that corresponds to the command by cutting the image out of a displayed image.

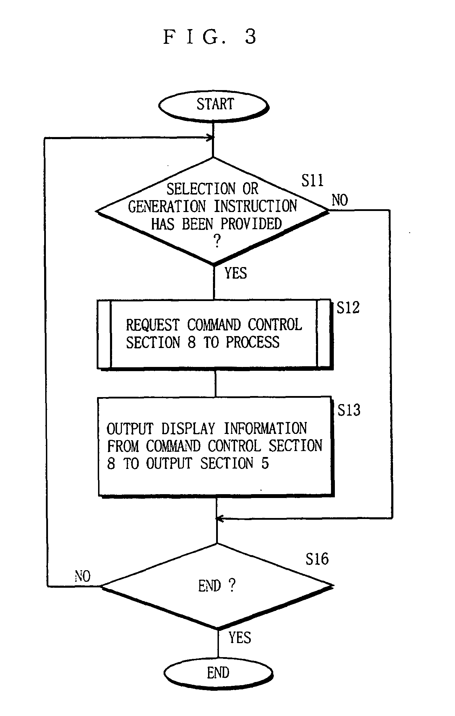

FIG. 3 is a flow chart showing the overall operation of the command control device. The command control device is controlled by the information processing section 2, which operates according to the program stored in the program storage 3. Each component in the information processing section 2 is further controlled by the central processing section 4. Therefore, hereinafter, the operation of the central processing section 4 is described with reference to FIG. 3.

First, in step S11, the central processing section 4 determines whether a selection instruction or generation instruction is provided by the input section 6. If any of these instructions is provided, the procedure goes to subroutine step S12. Otherwise, the procedure goes to step S16.

Such process in step S11 by the central processing section 4 is based on the assumption that only the input section 6 provides the selection and generation instructions. However, in step S11, the central processing section 4 may automatically determine whether to produce a generation instruction.

Such automatic determination occurs when, for example, in a situation where the number of executions or execution frequencies of the command is stored, the command or address has been executed or accessed many times or at frequent intervals, but not yet registered as a bookmark or in the command control information storage 7. In the above example, either or both of the number of executions and execution frequencies of the command is compared with a predetermined threshold.

Further, even if the generation instruction is provided by the input section 6 but the CPU is not available in time, the central processing section 4 may operate so as not to execute the instruction until the CPU is available.

Next, in subroutine step S12, the central processing section 4 activates the command control section 8 to request the display image generation process or command selection process by sending required parameters. On receiving the request, the command control section 8 carries out the process as requested, which will be described later in detail.

Furthermore, the central processing section 4 provides the output section 5 with display information from the command control section 8 (step S13). Then, in step S16, the central processing section 4 checks whether a system end instruction has been provided by the input section 6. If not, the procedure returns to step S11, and the central processing unit 4 repeats the above series of steps. If provided, the central processing unit 4 ends the process.

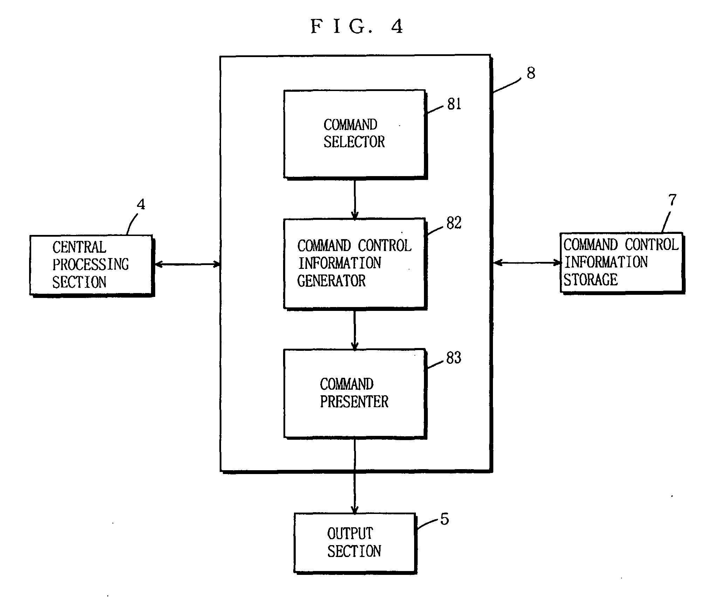

Next, with reference to FIG. 4, the operation and structure of the command control section 8 in the command control device are described. FIG. 4 is a block diagram showing the structure of the command control section 8 in the command control device. In FIG. 4, the command control section 8 includes a command selector 81, a command control information generator 82, and a command presenter 83.

The command control information generator 82 generates command control information to present display image information that corresponds to the command. The command control information will be described later.

The command presenter 83 displays a plurality of images that correspond to the commands in one screen based on the command control information stored in the command control information storage 7, thereby prompting the user to select the command.

The command selector 81 carries out a process accompanied by command selection based on the information presented by the command presenter 83. When any image corresponding to a specific command is selected, the command selector 81 also makes the central processing section 4 to execute a function of the command corresponding to the selected image.

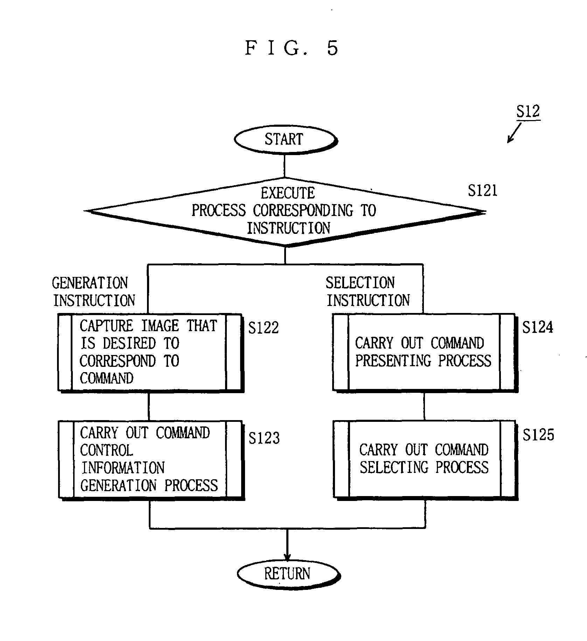

FIG. 5 is a flow chart showing the operation of the above-described command control section 8. Hereinafter, with reference to FIG. 5, the operation of the command control section 8 is described. In step S121 of FIG. 5, the command control section 8 analyzes the instruction and its parameter transmitted from the central processing section 4. As a result of analyzing, if the instruction is for generating an image that corresponds to the command, the procedure branches to subroutine step S122. If the instruction is for selecting a command, the procedure branches to subroutine step S124.

First, a flow of the process for the generation instruction is described. In subroutine step S122, the command control section 8 requests the central processing section 4 to capture the image that is desired to correspond to the command. In response, the central processing section 4 instructs the image capture section 10 to cut a specific image out of the display screen automatically or according to the user's instruction, thereby receiving data of the specific image for display from the image capture section 10. Specifically, the image capture section 10 transfers image data of the cut image from, for example, a video RAM storing image data of a display screen displayed on the output section 5 to another storage area. Note that the cut image may be a moving picture.

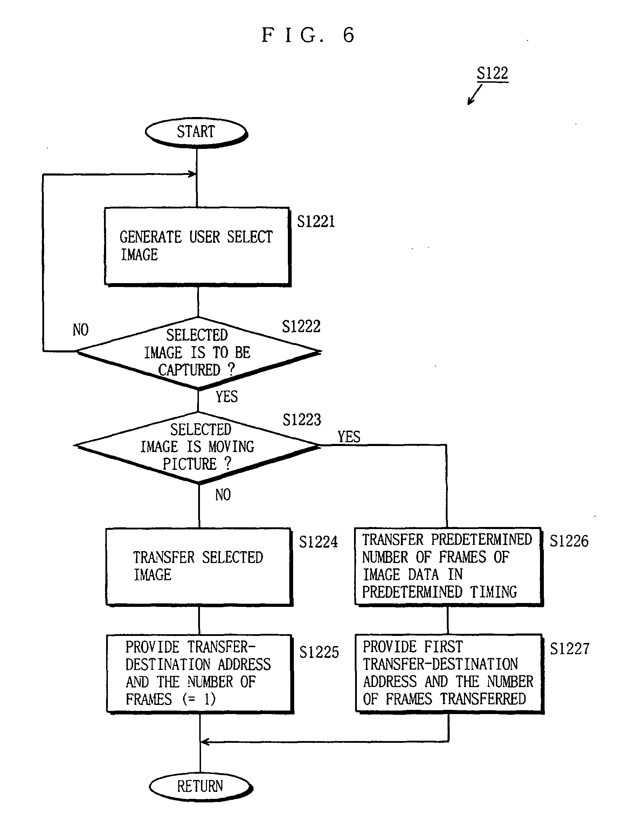

FIG. 6 is a flow chart showing the process of subroutine step S122 in detail. In step S1221 of FIG. 6, the central processing section 4 makes the user select an image that is desired to correspond to the command through the input section 6. To cut the selected image, the user specifies a partial area of the image displayed on the output section 5 through the input section 6 to instruct the central processing section 4 of the cut image. For such area specification, the user may use a mouse, for example, to specify a box-shaped area. Alternatively, an area to be cut out may be predetermined in size, and the user may specify only the center point of the area.

The image that is desired to correspond to the command may be automatically cut out. This case occurs in such situations that a specific command has been repeatedly executed or a specific address has been repeatedly accessed, but not been registered yet, and therefore a generation instruction is automatically issued as described above. In this case, for example, the image capture section 10 determines an image displayed by an application that operates by a command that is now being executed or was executed last time, and selects the image for capture.

Then, in step S1222, the central processing section 4 confirms whether the selected image is an image that is desired to correspond to the command. For example, the central processing section 4 provides the user with a message for making the user confirm whether to capture the selected image, and receives an input from the user through the input section 6. Consequently, if the selected image is to be captured, the procedure goes to step S1223. Otherwise, the procedure returns to step S1221.

In step S1223, the central processing section 4 determines whether the selected image is a moving picture. Specifically, the central processing section 4 monitors data of the selected image at predetermined time intervals (for example, several-fold refresh intervals or user-specified intervals) to determine whether the image data is moving-picture data that varies with time. If the selected image is determined to be a moving picture, the procedure goes to step S1226. Otherwise, the procedure goes to step S1224.

If the selected image is not a moving picture, in step S1224, the image capture section 10 transfers the image data that corresponds to the selected image typically from the video RAM to anther storage area. Then, in step S1225, the image capture section 10 provides the central processing section 4 with a transfer-destination address and the number of frames (1, because the image is a still picture). Then, the subroutine process ends, and the procedure returns to the flow of FIG. 5.

On the other hand, if the selected image is a moving picture, in step S1126, the image capture section 10 transfers a predetermined number of frames of the image data in predetermined timing typically from the video RAM to another storage area. For example, the image capture section 10 sequentially captures four frames of the image data at time intervals several times larger than refresh intervals, and sequentially transfers these frames. Then, in step S1227, the image capture section 10 provides the central processing section 4 with a first transfer-destination address and the number of frames transferred (4, for example). Note that the above moving-picture data may be stored in MPEG or animation GIF format. Then, the above subroutine process ends, and the procedure returns to the flow of FIG. 5.

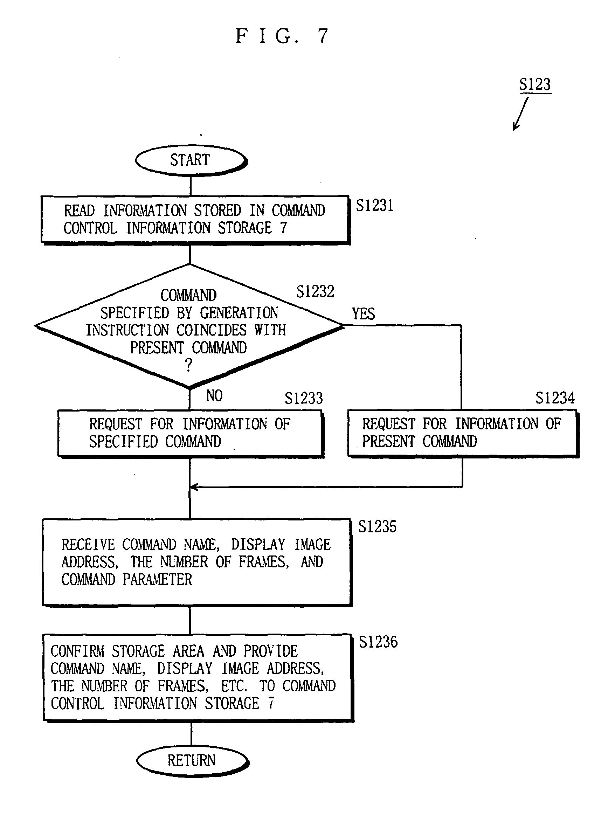

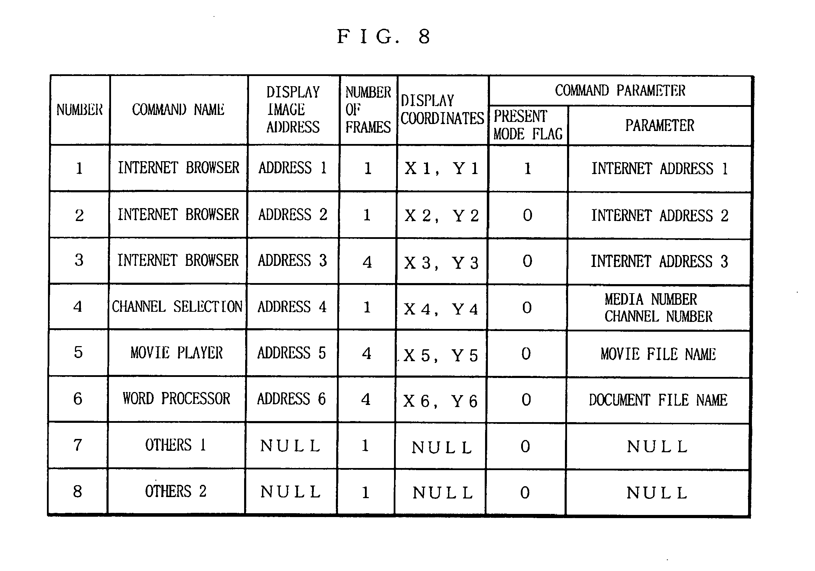

Then, in subroutine step S123 of FIG. 5, the command control information generator 82 receives parameters or information required for generating a display image, and carries out a command control information generation process. With reference to FIGS. 7 and 8, the command control information generation process is described below in detail.

FIG. 7 is a detailed flow chart showing the command control information generation process in subroutine step S123. In step S1231 of FIG. 7, the command control information generator 82 reads the command control information, as shown in FIG. 8, stored in the command control information storage 7.

FIG. 8 is a diagram showing an example of the command control information stored in the command control information storage 7. In FIG. 8 the command control information includes a command number, a command name, a display image address, the number of display-image frames, display coordinates, and a command parameter.

The command number indicates a record number of information that corresponds to a command stored in the command control information storage 7. The command name corresponds to a command for activating an Internet browser, channel selection application, movie player, word processor, or the like.

The display image address indicates an address in memory that stores a display image corresponding to a command. In the above example, the display image address is the transfer-destination address from the video RAM.

The number of display-image frames indicates the number of frames of the display image that corresponds to a command. For example, in FIG. 8, the number of frames stored in Record #1 is 1. Therefore, the display image is a still picture. On the other hand, the number of frames stored in Record #3 is 4. Therefore, the display image is a moving picture, and composed of four image frames that vary in time.

The display coordinates indicate coordinates (X, Y) that correspond to display coordinates when the display image is provided from the command presenter 83 to the output section 5 for display. In FIG. 8, these coordinates are one of any varying combinations of (X1, Y1) through (X6, Y6). How to generate such coordinates will be described later.

The command parameter indicates parameters required for controlling a display attribute, including a present mode flag and an application parameter, for example. The present mode flag indicates that the command is now being executed. In FIG. 8, only a value in the present mode flag that corresponds to an Internet address 1 referred to by the Internet browser is 1. This means that only this Internet browser is in ON state. The other values in the present mode flag are 0. This means that the other applications are in OFF state. The application parameter indicates a parameter such as an Internet address, media number, channel number, movie file name, document file name. The media number corresponds to a broadcasting medium such as ground-wave broadcasting, satellite broadcasting, or the like. The channel number is a number provided to a channel supplied over a specific broadcasting media.

Then, in step S1232 of FIG. 7, the command control information generator 82 refers to the command control information provided by the command control information storage 7 to determine whether the command specified by the generation instruction coincides with the present command.

For example, if the display image address in the command control information that corresponds to the command specified by the generation instruction is not NULL and the present mode flag is 1, the command control information generator 82 determines that the specified command coincides with the present command. In this case, the procedure goes to step S1234. Otherwise, the command control information generator 82 determines that the specified command does not coincide with the present command. In this case, the procedure goes to step S1233.

In step S1233, the command control information generator 82 requests the central processing section 4 to provide various information corresponding to the specified command (for example, command name, display image address, the number of display-image frames, command parameter). In response, the central processing section 4 provides the requested information. Then, the procedure goes to step S1235.

On the other hand, in step S1234, the command control information generator 82 requests the central processing section 4 to provide various information corresponding to the present command (command name, display image address, the number of display-image frames, command parameter). In response, the central processing section 4 provides the requested information. Then, the procedure goes to step S1235.

In step S1235, the command control information generator 82 receives the above various information. Then, in step S1236, the command control information generator 82 confirms that a storage area is allocated in the command control information storage 7. In FIG. 8, Records #7 and #8 are reserved areas. If there are no reserved areas, the user is provided with a message for prompting the user to select any command number and delete a record corresponding to the selected command number. Then, the record specified based on the user's selection is deleted. Alternatively, the command control information generator 82 may refer to how many times each command has been executed so far, and automatically delete a record corresponding to a command that has been least executed. After confirming the reserved area, the command control information generator 82 provides the various information such as the command name, the display image address, the number of display-image frames, and the command parameter to the command control information storage 7. Then, the command control information storage 7 stores the provided information. After the above process ends, the procedure returns to the flow of FIG. 5.

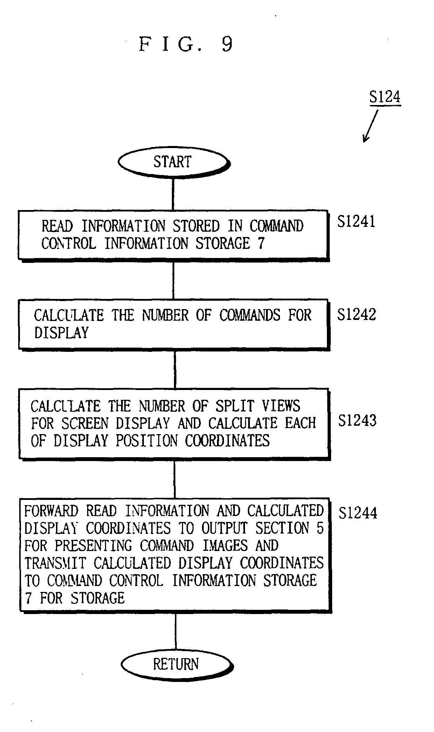

Next, a flow of the process for the selection instruction is described. In subroutine step S124 of FIG. 5, the command presenter 83 carries out a command presentation process. The command presentation process will be described below in detail with reference to FIG. 9. FIG. 9 is a flow chart showing the command presentation process in subroutine step S124.

In step S1241 of FIG. 9, the command presenter 83 reads the entire command control information stored in the command control information storage 7. Then, in step S1242, the command presenter 83 calculates the number of commands for display. For example, when the above-described command control information as shown in FIG. 8 is read, and all display images except an image whose display image address is NULL should be displayed, the number of display images corresponding to the commands for display is 6. Therefore, the number of commands for display is 6.

Then, in step S1243, the command presenter 83 calculates, from the number of commands for display, the number of commands that are simultaneously displayed in split views, and also calculates each of display position coordinates of the display images corresponding to the commands (command images). For example, assume that eight split views can be simultaneously displayed in one screen, in consideration of size and resolution of a display device. In this case, all the commands to be displayed as calculated above (= six commands) are simultaneously displayed in one screen. If the number of commands exceeds the number of displayable split views (= 8), the commands are displayed over several pages, for example, wherein the user goes to a next page for referring to currently-not-displayed commands by making an instruction. Further, the command presenter 83 calculates display coordinates for each command from (X1, Y1) through (X6, Y6) to adjust the number of split views to the number of commands, that is, 6. These coordinates may be calculated with predetermined coordinate data, or may be calculated so that each split view takes an identical rectangular shape.

Then, in step S1244, the command presenter 83 forwards the read information and the calculated display position coordinates to the output section 5 for presenting the command images, and also transmits the display position coordinates (x, y) to the command control information storage 7. On receiving these, the command control information storage 7 stores each of display position coordinates of the command images. Then, the procedure returns to the flow of FIG. 5. If the command image is different in size from the screen for display, the command image is appropriately magnified or reduced for display to fit in the screen.

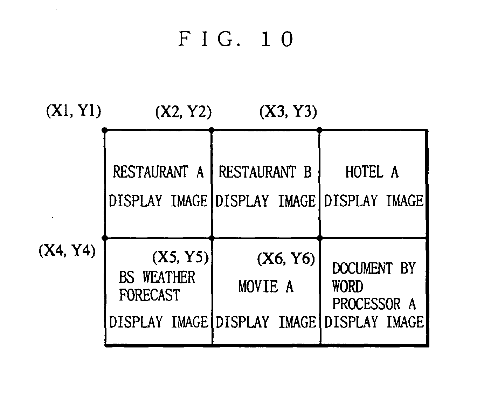

FIG. 10 is a diagram showing an example of display of the command images generated in the above-described manner. As shown in FIG. 10, six command images are displayed in this example, and correspond to the command control information of FIG. 8. That is, at display coordinates (X1, Y1), an image stored in the display image address 1 (here, restaurant A display image) is displayed; at display coordinates (X2, Y2), an image stored in the display image address 2 (here, restaurant B display image) is displayed; and at each of display coordinates (X3, Y3) through (X6, Y6), each image stored in the corresponding display address is displayed.

If the display image is composed of a plurality of image frames, these frames are sequentially displayed at predetermined time intervals preferably equal to those at image capturing. For example, the display image of Record #3 is displayed from the first through fourth frames, and then back to the first frame for repeated display. The user selects one of these display images through an input operation with a mouse, for example. Such selection process will be described below.

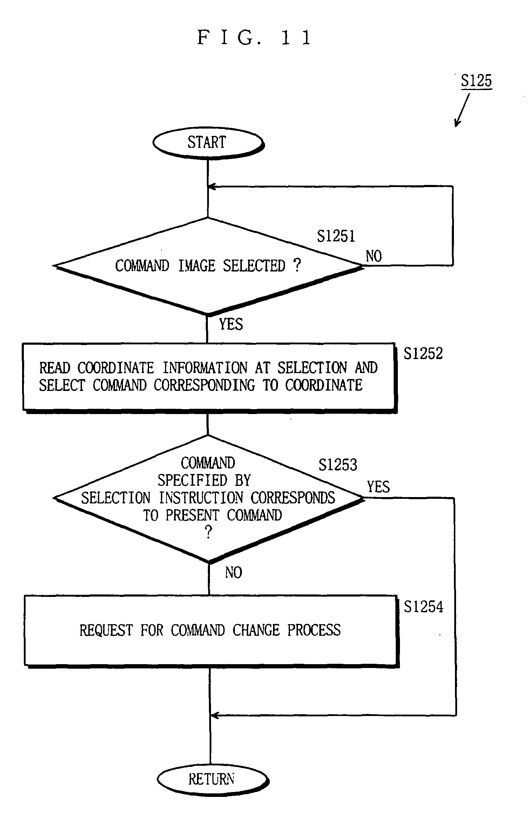

Then, in subroutine step S125 of FIG. 5, the command control section 8 carries out the command selection process in the command selector 81. FIG. 11 is a flow chart showing the command selection process carried out by the command selector 81 in subroutine step S125 in detail.

In step S1251, the command selector 81 determines whether any of the command images is selected by the user. If Yes, the procedure goes to step S1252. If No, the procedure is repeatedly looped back to the start of step S1251 until any of the command image is selected. Needless to say, this loop includes a general time-out or cancel process so as not to become endless.

In step S1252, the command selector 81 receives coordinate information for command selection, and selects a command that corresponds to the display coordinates included in the read command control information. Specifically, for example, the user clicks a portion of the command image shown in FIG. 10 with the mouse. Then, the command selector 81 selects the command by referring to the coordinates of the clicked point.

Then, in step S1253, the command selector 81 determines whether the command selected by the selection instruction coincides with the present command. If Yes, the procedure ends and returns to the flow of FIG. 5, and further to the flow of FIG. 3. If No, the procedure goes to step S1254.

In step S1254, the command selector 81 forwards the command control information to the central processing section 4 to request for a command change process. On receiving the request, the central processing section 4 switches the command to the selected command for execution. Specifically, the central processing section 4 activates the application such as an Internet browser or word processor as described above. Then, the procedure ends, and returns to the flow of FIG. 5 and further to the flow of FIG. 3.

Then, in step S13 of FIG. 3, the central processing section 4 provides the output section 5 with display information from the command control section 8 for display. The display information includes a message for confirming that various information has been successfully stored in the command control information storage 7, an error message indicating that such information has not been successfully stored, and animation representation for indicating that a specific command image has been selected. The animation representation is carried out as such that the selected command image looks as if being pressed, or faded out.

Then, in step S16, the central processing section 4 determines whether the procedure ends, and more specifically, whether a system end instruction has been provided by the input section 6. If Yes, the procedure ends. If No, the procedure returns to step S11.

As such, the command control device according to the present embodiment is structured so as to store an information display screen that appears when a specific command is executed and the parameters required for executing that command. Therefore, by using the present command control device for information navigation, the user can easily execute a command while viewing display images. Thus, improvement in user interface can be achieved.

### (Second Embodiment)

A command control device according to a second embodiment of the present invention is similar in structure to the command control device according to the first embodiment shown in FIG. 1. Therefore, the structure and operation of each of the similar components are not described again.

However, the command control device according to the second embodiment always includes the communication section 9, and is used with an Internet browser to enable the user to easily select an Internet address. More specifically, the present command control device is used in place of or together with bookmarks of the Internet browser. Therefore, the command to be executed always includes execution of the Internet browser. For this reason, the above-described command control information shown in FIG. 8 does not have to include information about the command name.

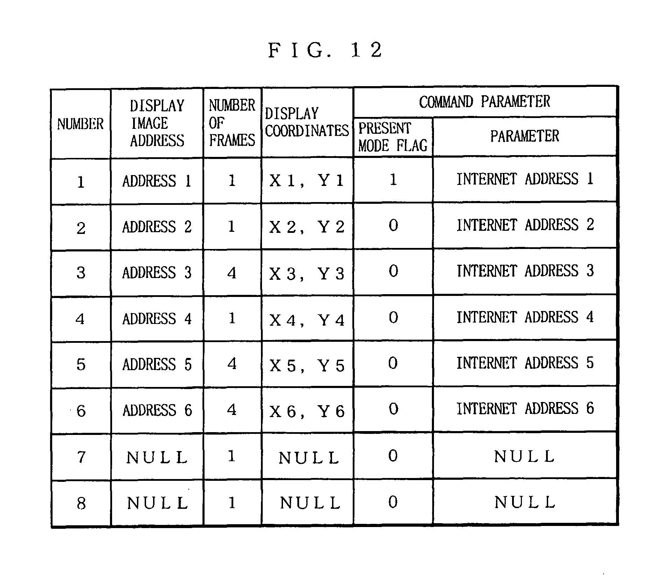

FIG. 12 is a diagram showing an example of the command control information used in the command control device according to the present embodiment. As shown in FIG. 12, the command control information does not include a command name, and the command parameter includes only a parameter for an Internet address. In these respects, the command control information shown in FIG. 12 is different from that shown in FIG. 8. Except that, they are similar to each other. For example, in FIG. 12, each image corresponding to #3, #5, and #6 is a moving picture composed of four image frames.

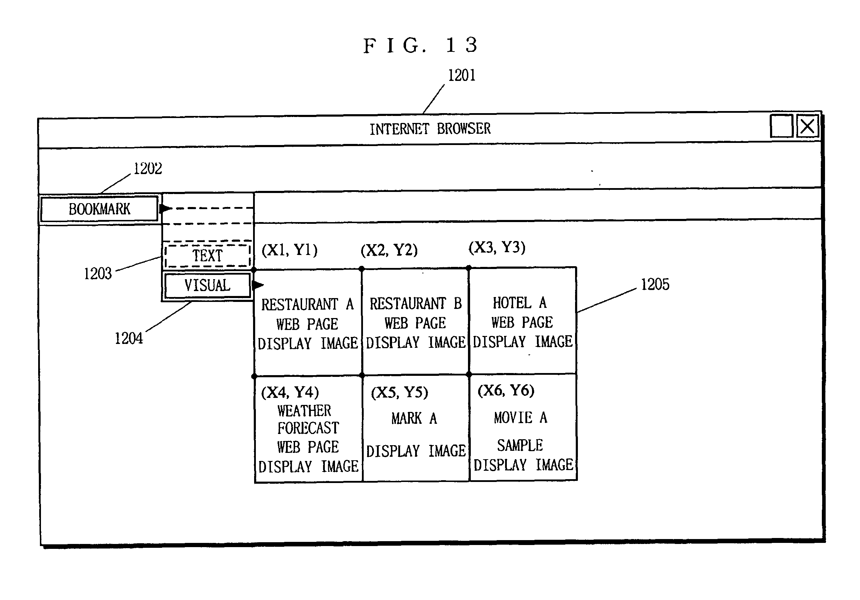

As such, an example of display in the present command control device used in place of or together with the bookmarks of the Internet browser is now described with reference to FIG. 13. FIG. 13 is a diagram showing an example of display of command images displayed in step S1244 described above.

In FIG. 13, an Internet browser 1201 includes a bookmark menu 1202. Note that bookmarking is one of the functions of the Internet browser. Typically, with this function, the user can register an Internet address of a web page that he or she has visited before, and thus can easily visit the web page next time by using the registered Internet address.

The bookmark menu 1202 further includes a text bookmark menu 1203 and a visual bookmark menu 1204. Therefore, as shown in FIG. 13, after selecting the bookmark menu, the user can further select the text bookmark menu or the visual bookmark menu that resides at a layer lower than the selected command. Conventionally used are only the text bookmark menu composed in text, and thus may be omitted herein.

When the user selects the visual bookmark menu, as shown in FIG. 13, a command display image 1205 is shown, which is similar in type to FIG. 10. In the command display image 1205, six command images are displayed based on the command control information of FIG. 12. The user selects one from these images by using the mouse, for example. The selection process has already been described in detail. Note that the command display image 1205 of FIG. 13 includes a mark A display image and a movie A sample display image that are arbitrarily cut out by selection instructions from the user. Also, these images correspond to #5 and #6 in FIG. 12, respectively, and therefore are moving pictures. Thus, for example, the mark A display image is a moving picture that rotates, while the movie A sample display image is a moving picture containing a scene of a movie A.

As such, the command control device according to the present embodiment is structured so as to store a display screen of a web page that appears when a specific command is executed and an Internet address that is required for executing that command. Therefore, by using the present command control device for an Internet browser, the user can easily select an Internet address while viewing the display image. Thus, improvement in user interface can be achieved.

### (Third Embodiment)

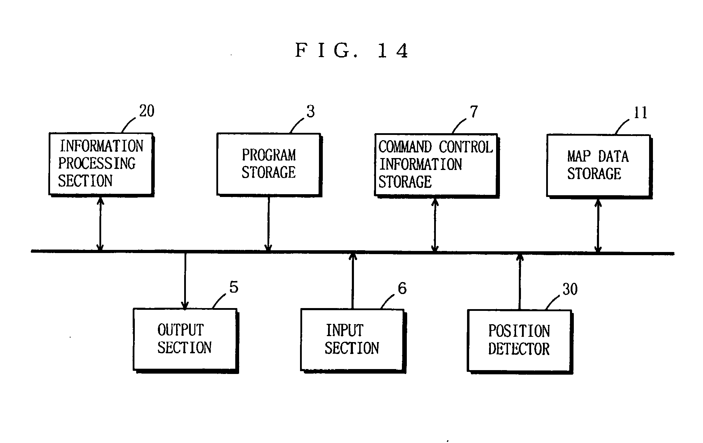

FIG. 14 is a block diagram showing the structure of a navigation device according to a third embodiment of the present invention. The navigation device is implemented in a general computer system. In FIG. 14, the navigation device includes an information processing section 20, the program data storage 3, the command control information storage 7, the output section 5, the input section 6, and a map data storage 11, and a position detecting section 30. All of these components are connected to one another via a common system bus.

Therefore, the navigation device is similar to the command control device of FIG. 1 but different in that the communication section 9 is omitted, and the information processing section 20 is provided instead of the information processing section 2, and the map data storage 11 and the position detecting section 30 are further provided. Alternatively, the communication section 9 may be provided. The components similar to those shown in FIG. 1 are not described herein.

The information processing section 20 is composed of a CPU that operates according to the program stored in the program storage 3, and carries out various processes for navigation command control, such as command generation process and command selection process. The information processing section 20 further carries out, according to the user's instruction, a route guidance for a destination or a place by way of the destination, which will be described later in detail. If the program storage 3 is implemented by an exchangeable storage medium, the storage medium may be replaced by another that stores a new program as required, which has been described before.

The position detecting section 30 is constructed of a GPS receiver, radio beacon receiver, vehicle speed sensor, angular speed sensor, absolute direction sensor, or the like, to detect a present position of the vehicle, for example. The map data storage 11 stores two- or three-dimensional map data including geographic features, states of connection among intersections and roads, and information about coordinates, shapes, attributes, and regulations. The map data stored in the map data storage 11 is read by the information processing section 20 as required for use.

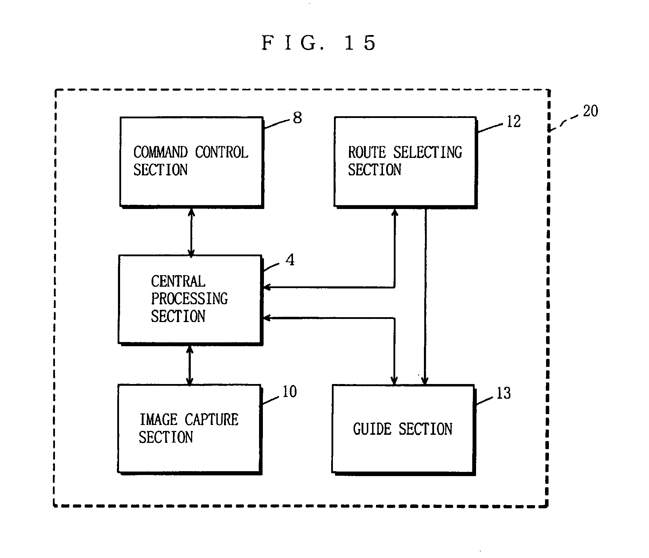

FIG. 15 is a block diagram showing a detailed structure of the information processing section 20 in FIG. 14. In FIG. 15, the information processing section 20 includes the central processing section 4, the command control section 8, the image capture section 10, a route selecting section 12, and a guide section 13. Therefore, the information processing section 20 has the same structure as that of the information processing section 2 of FIG. 2 with the route selecting section 12 and the guide section 13 further provided thereto. The same components as those of FIG. 2 are not described herein.

The route selecting section 12 reads, from the map data storage 11, map data of an area required according to an instruction from the input section 6. Typically, the read map data includes traffic regulations at intersections and one-way traffic regulations. The route selecting section 12 determines a starting point and destination based on information about the present position of the vehicle provided by the position detecting section 30 and the instruction including location information provided by the input section 6, respectively. Based on the determination, the route selecting section 12 searches for a minimum-cost route between the starting point and the destination (minimum-time route or minimum-distance route). The route selecting section 12 outputs route information to the guide section 13.

The guide section 13 generates guide information indicating to the user which way to go to reach the destination. To generate the guide information, the guide section 13 uses the information about the present position of the vehicle provided by the position detecting section 30 and the map data provided by the map data storage 11. Guiding may be made by map display or through voice.

Note that the central processing section 4 transmits and receives various information between the command control section 8 and the image capture section 10 to control the operation of each component including the route selecting section 12 and the guide section 13.

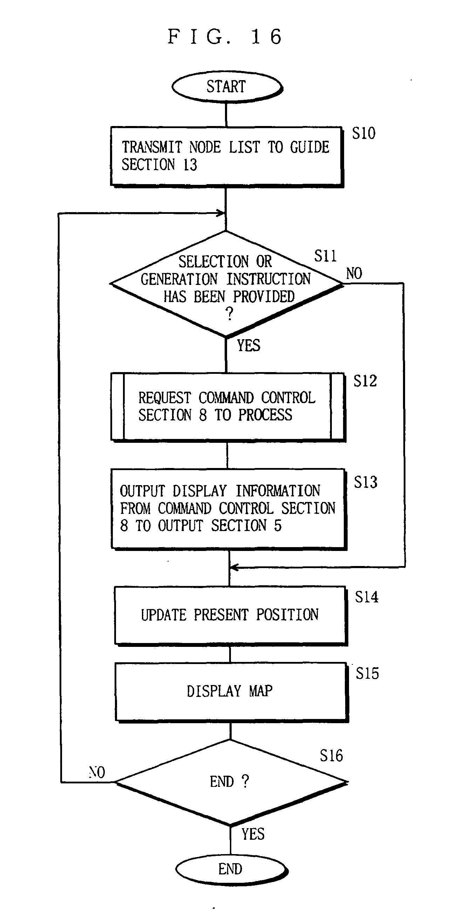

FIG. 16 is a flow chart showing the overall operation of the present navigation device. The navigation device is controlled by the information processing section 20 that operates according to a program stored in the program storage 3. Furthermore, each component included in the information processing section 20 operates under the control of the central processing section 4. Therefore, the operation of the navigation device is similar to that of the command control device according to the first embodiment. The processes in steps S11 through S13 and S16 of FIG. 16 are identical to those in corresponding steps of FIG. 3. Thus, the same processes of FIG. 16 are provided with the same step numbers, and not described herein. With reference to FIG. 16, the operation of the central processing section 4 is described below.

First, in step S10, the central processing section 4 instructs the route selecting section 12 to provides the guide section 13 with a node list resulted from the route search as described above. The processes in step S11 through S13 are not described herein.

Then, in step S14, the central processing section 4 instructs the guide section 13 to receive a position of the vehicle from the position detecting section 30 for updating the present position. The central processing section 4 further instructs the output section 5 to output map display after the present position data is updated (step S15).

Then, in step S16, the central processing section 4 determines whether the process, more specifically, route guide, ends. If No, the procedure returns to step S11 to repeat the above series of processes. If Yes, the process ends.

The structure and operation of the image capture section 10 in the navigation device are also basically similar to those in the command control device according to the first embodiment. However, in step S1221 of FIG. 6, an image to be desired to correspond to a navigation command is not necessarily cut out from the map display screen, but all or part of an image externally provided may be used. For example, the navigation device may be structured so as to receive a still or moving picture such as the landscape shot by an externally-connected image pickup device such as a CCD camera and use the picture as the image for the navigation command. Still further, for example, the navigation device may include a communication section for receiving an image provided by an external image server or general web page, thereby using the received image as the image for the navigation command.

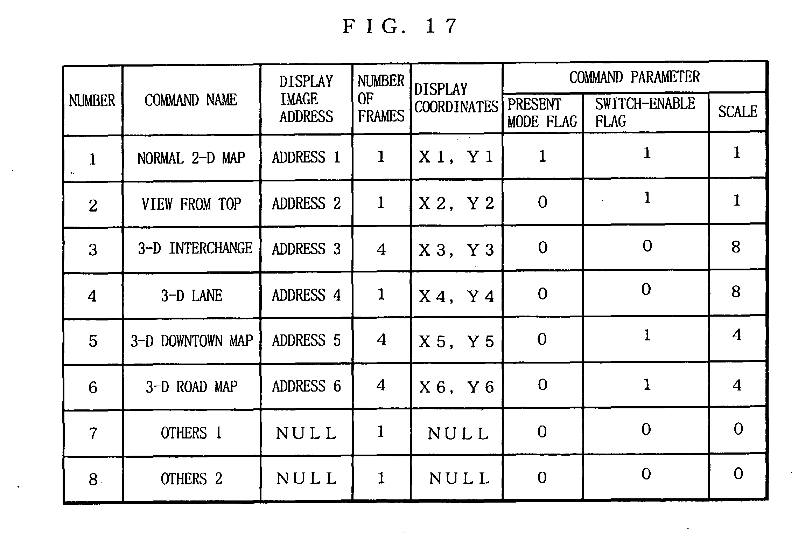

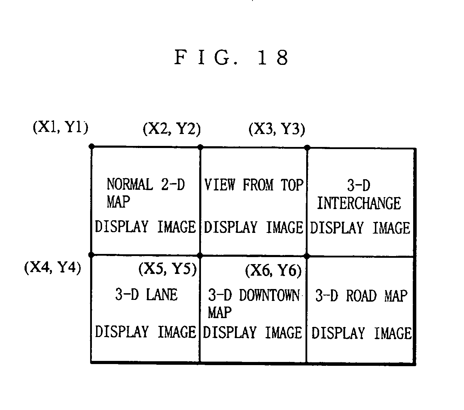

The structures and operations of the command control information generator 82 and the command presenter 83 in the navigation device are also basically similar to those in the command control device according to the first embodiment. However, the contents of the command control information and the display contents of the command images are slightly different from those in the first embodiment, and therefore are described with reference to FIGS. 17 and 18.

FIG. 17 is a diagram showing the command control information stored in the command control information storage 7. In FIG. 17, the command control information includes a command number, a command name, a display image address, the number of display-image frames, display coordinates, and command parameters. The command parameters include a present mode flag, a switch-enable flag, and a scale.

The command number indicates a record number of information that corresponds to the navigation command stored in the command control information storage 7. The command name indicates a name that corresponds to the navigation command. The navigation command includes the one for switching among various map display formats including a view from top and a 3-D interchange, but not restrictive thereto.

The display image address indicates an address in memory that stores the display image corresponding to the navigation command. The number of display-image frames indicates the number of frames of the display image corresponding to the command. The display coordinates indicate coordinates (X, Y) that correspond to display coordinates when the display image is provided from the command presenter 83 to the output section 5 for display.

The command parameters include parameters required for controlling display attributes, such as the present mode flag, the switch-enable flag, and the scale. The present mode flag indicates that the navigation command is currently being executed. In FIG. 17, only a value of the present mode flag that corresponds to #1 "normal 2-D map" is 1. Therefore, only the command "normal 2-D map" is in ON state. The other values of the present mode flag are all 0. Therefore, the other map-display-mode command is in OFF state.

The switch-enable flag indicates whether the display mode can be changed when a specific command is specified at the present vehicle position. For example, "normal 2-D map", "view from top", "national 3-D road display" are generally available wherever the vehicle is. Therefore, the value of the switch-enable flag is always 1 for these commands. However, "3-D interchange enlarged view", "3-D lane view", and "3-D downtown map" can often be displayed only when the vehicle is at or in the vicinity of a predetermined point. Thus, the value of the switch-enable flag is set to be switchable as appropriate based on the vehicle position detected by the position detecting section 30. With this setting, the user can easily recognize the unavailable navigation command for switching the display format.

The scale indicates a display scale for map display based on the specified navigation command. In FIG. 17, the scale that corresponds to #1 "normal 2-D map" indicates 1, meaning that the map is displayed as it is. The scale that corresponds to #3 "3-D interchange" indicates 8, meaning that the map is displayed by eight times. Further, the scale may also indicate a position of a viewpoint.

The display contents of the command images are now described. FIG. 18 is a diagram showing an example of display of images that correspond to the commands and are generated through the command presenting process as described above. As shown in FIG. 18, six command images are displayed in this example, and correspond to the navigation commands of FIG. 17. That is, at display coordinates (X1, Y1), an image stored in the display image address 1 (here, normal 2-D map display image) is displayed; at display coordinates (X2, Y2), an image stored in the display image address 2 (here, a view-from-top display image) is displayed; and at each of display coordinates (X3, Y3) through (X6, Y6), each image stored in the corresponding display address is displayed. Note that, as stated above, if the display image is composed of a plurality of image frames, these frames are sequentially displayed at predetermined time intervals preferably equal to those at image capturing.

As such, the navigation device according to the present embodiment is structured so as to store a display screen of a web page that appears when a specific navigation command is executed and the parameters that are required for executing that navigation command. Therefore, the user can easily execute the navigation command while viewing the display image. Thus, improvement in user interface can be achieved.

While the invention has been described in detail, the foregoing description is in all aspects illustrative and not restrictive. It is understood that numerous other modifications and variations can be devised without departing from the scope of the invention.

## Claims

1. A navigation device for displaying a guide including a map, said navigation device comprising:
an input section (6), suitable for being provided with a navigation command for switching a display format of the map;
a map data storage (11) for previously storing information for generating said map;
a guide section (13) for generating the map displayed in the display format corresponding to said navigation command from the information stored in said map data storage (11) to generate the guide to a destination;
an output section (5) for outputting a display screen including the guide generated by said guide section (13);
an image capture section (10) for capturing a display image corresponding to said navigation command from said display screen;
a command control information generator (82) for generating command control information including information about the display image captured by said image capture section (10) and said navigation command;
a command control information storage (7) for storing said command control information;
a command presenter (83) for making said output section (5) present said display image corresponding to said command control information stored in said command control information storage (7) so that the user can select the navigation command to be executed; and
a command selector (81), when the user selects said display image provided by said command presenter (83), for executing the navigation command corresponding to the display image.

2. The navigation device according to claim 1, wherein said image capture section (10) captures the image of an area selected by the user from said display screen.

3. The navigation device according to claim 1, wherein said image capture section (10) automatically captures all or part of the display screen corresponding to said navigation command according to prescribed conditions.

4. The navigation device according to claim 3, wherein said prescribed conditions are determined based on either or both of the number of executions of the command and the number of execution frequencies of the command.

5. The navigation device according to claim 1, wherein said display image is a moving picture that varies with time.

6. A navigation command control method for displaying a guide including a map and executing a navigation command for switching a display format of the map, said method comprising the steps of:
capturing a display image corresponding to said navigation command from a display screen for presenting said guide;
generating command control information including information about said display screen and said navigation command;
presenting the display image corresponding to said command control information so that the user can select the navigation command to be executed; and
executing, when the user selects said display image presented in said presenting step, the navigation command corresponding to the display image.

7. The navigation command control method according to claim 6, wherein
said image capturing step comprises the steps of:
selecting an image of an area desired by the user from said display screen; and
capturing said selected image of the area.

8. The navigation command control method according to claim 7, wherein
said image capturing step comprises a step of automatically capturing all or part of the display screen corresponding to said navigation command according to prescribed conditions.

9. The navigation command control method according to claim 8, wherein
said prescribed conditions are determined based on either or both of the number of executions of said navigation command and the number of execution frequencies of said navigation command.

10. The navigation command control method according to claim 6, wherein
said display image is a moving picture that varies with time.

11. A computer-readable recording medium on which a program is recorded, said program being suitable for making a navigation device for displaying a guide including a map and provided with a navigation command for switching a display format of the map execute the steps of:
capturing a display image corresponding to said navigation command from a display screen for presenting said guide;
generating command control information including information about said display screen and said navigation command;
presenting the display image corresponding to said command control information so that the user can select the navigation command to be executed; and
executing, when the user selects said display image presented in said presenting step, the navigation command corresponding to the display image.

## Patentansprüche

1. Navigationsvorrichtung zum Anzeigen einer Führung einschließlich einer Karte, wobei die Navigationsvorrichtung umfasst:
einen Eingabeabschnitt (6), der dazu geeignet ist, mit einem Navigationsbefehl zum Wechseln eines Anzeigeformats der Karte zur Verfügung gestellt zu werden;
einen Kartendatenspeicher (11) zum vorherigen Speichern von Informationen zum Erzeugen der Karte;
einen Führungsabschnitt (13) zum Erzeugen der Karte, die im Anzeigeformat angezeigt wird, das dem Navigationsbefehl entspricht, aus den Informationen, die im Kartendatenspeicher gespeichert sind, um die Führung zu einem Ziel zu erzeugen;
einen Ausgabeabschnitt (5) zum Ausgeben eines Anzeigebildschirms, der die Führung beinhaltet, die durch den Führungsabschnitt (13) erzeugt wurde;
einen Bildaufnahmeabschnitt (10) zum Aufnehmen eines Anzeigebildes, das dem Navigationsbefehl entspricht, vom Anzeigebildschirm;
einen Befehlssteuerungsinformationserzeuger (82) zum Erzeugen von Befehlssteuerungsinformationen, die Informationen über das Anzeigebild enthalten, das durch den Bildaufnahmeabschnitt (10) aufgenommen wird, und den Navigationsbefehl;
einen Befehlssteuerungsinformationsspeicher (7) zum Speichern der Befehlssteuerinformationen;
einen Befehlsdarsteller (83), um den Ausgabeabschnitt (5) dazu zu veranlassen, das Anzeigebild darzustellen, das der Befehlssteuerinformation entspricht, die im Befehlssteuerinformationsspeicher (7) gespeichert ist, so dass der Benutzer den auszuführenden Navigationsbefehl auswählen kann; und
einen Befehlsauswähler (81), wenn der Benutzer das Anzeigebild auswählt, das durch den Befehlsdarsteller (83) zur Verfügung gestellt wird, zum Ausführen des Navigationsbefehls, der dem Anzeigebild entspricht.

2. Navigationsvorrichtung gemäß Anspruch 1, wobei der Bildaufnahmeabschnitt (10) das Bild eines Gebiets aufnimmt, das durch den Benutzer vom Anzeigebildschirm ausgewählt wird.

3. Navigationsvorrichtung gemäß Anspruch 1, wobei der Bildaufnahmeabschnitt (10) automatisch den ganzen oder einen Teil des Anzeigebildschirms aufnimmt, der dem Navigationsbefehl entspricht, gemäß der vorgeschriebenen Bedingungen.

4. Navigationsvorrichtung gemäß Anspruch 3, wobei die vorgeschriebenen Bedingungen auf der Grundlage der Anzahl an Ausführungen des Befehls und/oder der Anzahl an Ausführungshäufigkeiten des Befehls bestimmt wird.

5. Navigationsvorrichtung gemäß Anspruch 1, wobei das Anzeigebild ein sich bewegendes Bild ist, das mit der Zeit variiert.

6. Navigationsbefehlssteuerverfahren zum Anzeigen einer Führung, die eine Karte umfasst, und Ausführen eines Navigationsbefehls zum Wechseln eines Anzeigeformats der Karte, wobei das Verfahren folgende Schritte umfasst:
Aufnehmen eines Anzeigebilds, das dem Navigationsbefehl entspricht, vom Anzeigebildschirm, zum Darstellen der Führung;
Erzeugen von Befehlssteuerinformationen, die Informationen über den Anzeigebildschirm und den Navigationsbefehl umfassen;
Darstellen des Anzeigebildes, das den Befehlssteuerinformationen entspricht, so dass der Benutzer den auszuführenden Navigationsbefehl auswählen kann; und
wenn der Benutzer das Anzeigebild auswählt, das im Darstellungsschritt dargestellt wird, Ausführen des Navigationsbefehls, der dem Anzeigebild entspricht.

7. Navigationsbefehlssteuerverfahren gemäß Anspruch 6, wobei der Bildaufnahmeschritt folgende Schritte umfasst:
Auswählen eines Bildes eines vom Benutzer gewünschten Gebiets aus dem Anzeigebildschirm; und
Aufnehmen des ausgewählten Bildes des Gebiets.

8. Navigationsbefehlssteuerverfahren gemäß Anspruch 7, wobei der Bildaufnahmeschritt einen Schritt des automatischen Aufnehmens des ganzen oder eines Teils des Anzeigebildschirms umfasst, der dem Navigationsbefehl entspricht, in Übereinstimmung mit vorgeschriebenen Bedingungen.

9. Navigationsbefehlssteuerverfahren gemäß Anspruch 8, wobei die vorgeschriebenen Bedingungen auf der Grundlage der Anzahl an Ausführungen der Navigationsbefehle und/oder der Anzahl von Ausführungshäufigkeiten des Navigationsbefehls bestimmt wird.

10. Navigationsbefehlssteuerverfahren gemäß Anspruch 6, wobei das Anzeigebild ein sich bewegendes Bild ist, das mit der Zeit variiert.

11. Computerlesbares Aufnahmemedium, auf dem ein Programm aufgenommen ist, wobei das Programm dafür geeignet ist, eine Navigationsvorrichtung zum Anzeigen einer Führung, die eine Karte umfasst und mit einem Navigationsbefehl zum Wechseln eines Anzeigeformats ausgestattet ist, dazu zu veranlassen, die folgenden Schritte auszuführen:
Aufnehmen eines Anzeigebildes, das dem Navigationsbefehl entspricht, von einem Anzeigebildschirm zum Darstellen der Führung;
Erzeugen von Befehlssteuerinformationen, die Informationen über den Anzeigebildschirm und den Navigationsbefehl umfassen;
Darstellen des Anzeigebilds, das den Befehlssteuerinformationen entspricht, so dass der Benutzer den auszuführenden Navigationsbefehl auswählen kann; und
wenn der Benutzer das Anzeigebild auswählt, das im Darstellungsschritt dargestellt wird, Ausführen des Navigationsbefehls, der dem Anzeigebild entspricht.

## Revendications

1. Dispositif de navigation pour l'affichage d'un guidage comportant une carte géographique, ledit dispositif de navigation comprenant:
une section d'entrée (6), apte à recevoir une instruction de navigation afin de commuter un format d'affichage de la carte géographique;
un stockage de données cartographiques (11) pour stocker au préalable des informations visant à générer ladite carte géographique;
une section de guidage (13) pour générer la carte géographique affichée dans le format d'affichage correspondant à ladite instruction de navigation d'après les informations stockées dans ledit stockage de données cartographiques (11) afin de générer le guidage vers une destination;
une section de sortie (5) pour délivrer en sortie un écran d'affichage comportant le guidage généré par ladite section de guidage (13);
une section de capture d'image (10) pour capturer une image d'affichage correspondant à ladite instruction de navigation à partir dudit écran d'affichage;
un générateur d'informations de commande d'instructions (82) pour générer des informations de commande d'instructions comportant des informations concernant l'image d'affichage capturée par ladite section de capture d'image (10) et ladite instruction de navigation;
un stockage d'informations de commande d'instructions (7) pour stocker lesdites informations de commande d'instructions;
un présentateur d'instructions (83) pour amener ladite section de sortie (5) à présenter ladite image d'affichage correspondant auxdites informations de commande d'instructions stockées dans ledit stockage d'informations de commande d'instructions (7) afin que l'utilisateur puisse sélectionner l'instruction de navigation à exécuter; et
un sélecteur d'instructions (81), lorsque l'utilisateur sélectionne ladite image d'affichage fournie par ledit présentateur d'instructions (83), pour exécuter l'instruction de navigation correspondant à l'image d'affichage.

2. Dispositif de navigation selon la revendication 1, dans lequel ladite section de capture d'image (10) capture l'image d'une région sélectionnée par l'utilisateur à partir dudit écran d'affichage.

3. Dispositif de navigation selon la revendication 1, dans lequel la section de capture d'image (10) capture automatiquement l'ensemble ou une partie de l'écran d'affichage correspondant à ladite instruction de navigation selon des conditions prescrites.

4. Dispositif de navigation selon la revendication 3, dans lequel lesdites conditions prescrites sont déterminées sur la base soit de l'un ou l'autre ou des deux parmi le nombre d'exécutions de l'instruction et le nombre de fréquences d'exécution de l'instruction.

5. Dispositif de navigation selon la revendication 1, dans lequel ladite image d'affichage est une image animée qui varie au cours du temps.

6. Procédé de commande d'instructions de navigation pour l'affichage d'un guidage comportant une carte géographique et l'exécution d'une instruction de navigation dans le but de commuter un format d'affichage de la carte géographique, ledit procédé comprenant les étapes de:
capturer une image d'affichage correspondant à ladite instruction de navigation à partir d'un écran d'affichage pour présenter ledit guidage;
générer des informations de commande d'instructions comportant des informations concernant ledit écran d'affichage et ladite instruction de navigation;
présenter l'image d'affichage correspondant auxdites informations de commande d'instructions de sorte que l'utilisateur puisse sélectionner l'instruction de navigation à exécuter; et
exécuter, lorsque l'utilisateur sélectionne ladite image d'affichage présentée dans ladite étape de présentation, l'instruction de navigation correspondant à l'image d'affichage.

7. Procédé de commande d'instructions de navigation selon la revendication 6, dans lequel ladite étape de capture d'image comprend les étapes de:
sélectionner une image d'une région désirée par l'utilisateur à partir dudit écran d'affichage; et
capturer ladite image sélectionné de la région.

8. Procédé de commande d'instructions de navigation selon la revendication 7, dans lequel ladite étape de capture d'image comprend une étape de capture automatique de l'ensemble ou d'une partie de l'écran d'affichage correspondant à ladite instruction de navigation selon des conditions prescrites.

9. Procédé de commande d'instructions de navigation selon la revendication 8, dans lequel lesdites conditions prescrites sont déterminées sur la base soit de l'une ou l'autre ou des deux parmi le nombre d'exécutions de ladite instruction de navigation et le nombre de fréquences d'exécution de ladite instruction de navigation.

10. Procédé de commande d'instructions de navigation selon la revendication 6, dans lequel ladite image d'affichage est une image animée qui varie au cours du temps.

11. Support d'enregistrement lisible par ordinateur sur lequel un programme est enregistré, ledit programme étant apte à amener un dispositif de navigation pour l'affichage d'un guidage comportant une carte géographique et pourvu d'une instruction de navigation afin de commuter un format d'affichage de la carte géographique à exécuter les étapes de:
capturer une image d'affichage correspondant à ladite instruction de navigation à partir d'un écran d'affichage pour présenter ledit guidage;
générer des informations de commande d'instructions comportant des informations concernant ledit écran d'affichage et ladite instruction de navigation;
présenter l'image d'affichage correspondant auxdites informations de commande d'instructions afin que l'utilisateur puisse sélectionner l'instruction de navigation à exécuter; et
exécuter, lorsque l'utilisateur sélectionne ladite image d'affichage présentée dans ladite étape de présentation, l'instruction de navigation correspondant à l'image d'affichage.
